Europäisches Patentamt

European Patent Office

Office européen des brevets

(19)

(11) **EP 1 073 309 A2**

(12) **EUROPEAN PATENT APPLICATION**

(43) Date of publication:
**31.01.2001 Bulletin 2001/05**

(51) Int. Cl.[7]: **H04Q 11/04**

(21) Application number: **00306077.9**

(22) Date of filing: **17.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.07.1999 GB 9917721**

(71) Applicant: **INTELLPROP LIMITED**
**Guernsey, Channel Islands (GB)**

(72) Inventor: **Wilson, Jeffrey**
**Fareham, Hampshire PO16 7OH (GB)**

(74) Representative:
**Pilch, Adam John Michael**
**D. YOUNG & CO.,**
**21 New Fetter Lane**
**London EC4A 1DA (GB)**

(54) **A non-blocking circuit switch**

(57)     A technique for constructing non-blocking telecommunication circuit switches of arbitrary size overcomes the constraints of memory access speed. Multiple switching block memories (101 - 104, 201 - 204) are used in order to provide multiple copies of input data, with memory reconfiguration between read (Figure 4) and write (Figure 5) cycles. Accordingly, there is multiple access to all input data thereby allowing multiple output streams (OUT1 - OUT4) to be provided, which can be multiplexed to the required output.

Fig.5

Fig.4

EP 1 073 309 A2

**Description**

The present invention relates to telecommunication circuit switches, and in particular to non-blocking telecommunication circuit switches.

In telecommunications it is customary to transmit pulse code modulated (PCM) data as time division multiplexed (TDM) serial streams. Typically, the data is sampled at 8kHz so there are normally 8000 TDM frames per second. Each frame typically carries 32, 128 or more time-slots (or channels) each containing a fixed amount of data, usually a single byte.

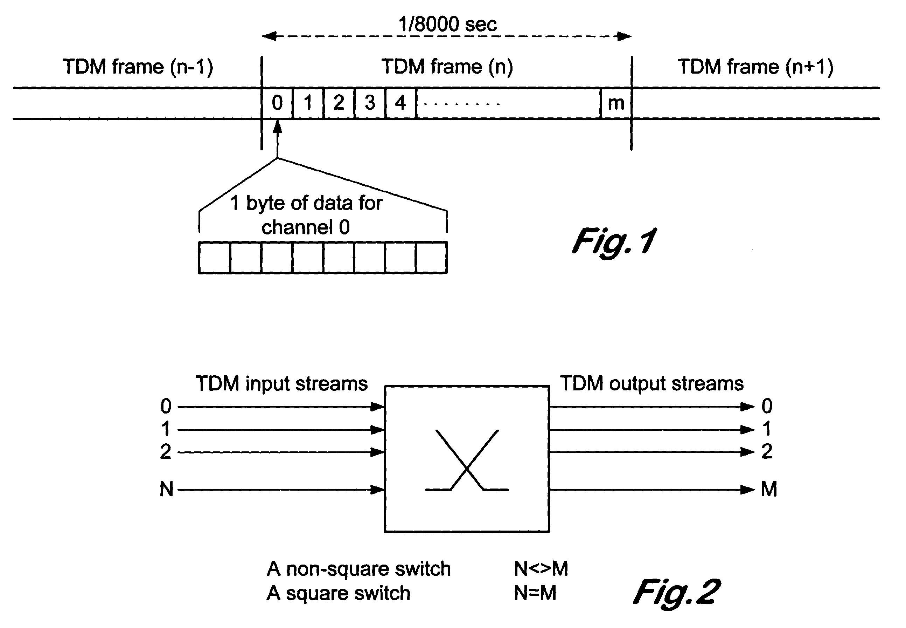

Figure 1 of the accompanying drawings is an illustration of such TDM framing. Since each channel in a single frame usually belongs to a different call, in order to route calls through a network it is necessary to be able to select or switch individual time-slots on one stream to the same or a different slot position on another stream, or to switch slots to a different position on the same stream. This function of TDM channel switching is central to telecom switch (exchange) operation. Devices which perform this routing are generally known as either crosspoint switches, or just switches.

In small scale switches, the switching can be implemented by integrated circuits which contain onboard memory, but for larger switches which are capable of switching large numbers of streams, the larger memory requirements result in the need to use additional memory devices to support the switching circuitry.

A TDM switch has a number N of input streams and a number M of output streams, as shown in Figure 2 of the drawings. The number N of input streams may or may not be equal to the number M of output streams. A "square" switch has an equal number of incoming and outgoing streams ( N=M ), which is a special case of the general switch. A general non-blocking switch is one which has a number of streams, each of which may be arbitrarily allocated as an input or an output stream, and can route any channel on any input stream to any free channel on any output stream, regardless of the routing of other channels.

Conversely, a blocking switch does not have the resources to do this in every case, and certain combinations of routings will prevent some other routings from being made. The non-blocking switch is generally the preferred implementation as it offers more functionality.

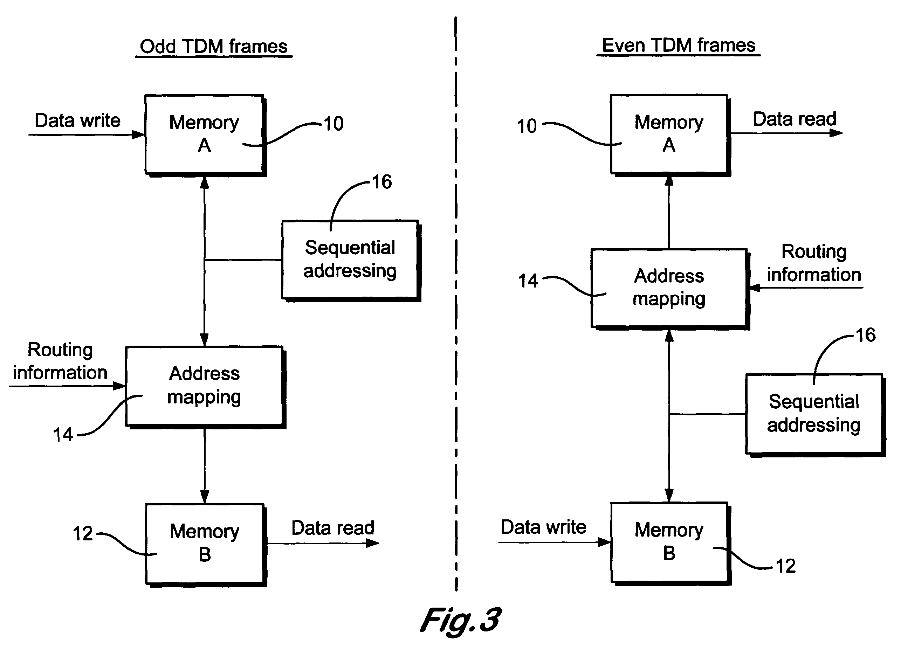

The core of a switching matrix is typically an area of memory. Assuming that an example of a square switch has N input streams and N output streams, each with T channels per TDM frame, one byte per channel and 8000 TDM frames per second, disregarding implementational efficiencies which can be gained, a simplified explanation of the functioning of such a switch follows, with reference to Figure 3 of the drawings which shows a technique of memory swapping.

As shown in Figure 3, there are provided two identical memory spaces (memory A and memory B) 10, 12. An address mapping circuit 14 receives routing information, and a sequential addressing circuit 16 provides addressing for both memory spaces. During the period of a single TDM frame, data from all N input streams is written to the memory A. This comprises N*T*8000 bytes per second. Therefore the memory A requires a write access time of 1/(N*T*8000) seconds per write cycle. At the end of the TDM frame, the memory space 10 (memory A) is then swapped with the memory space 12 (memory B). During the next TDM frame, the memory B is filled while the memory A is read out to fill the output channels. The output also comprises N*T channels, at N*T*8000 bytes per second. Therefore the memory also requires a read access time of 1/(N*T*8000) seconds per read cycle. The switching function is achieved by addressing the data in a suitable predetermined order to effect the necessary routing to the desired destination channels. For simple input to output routing, this address manipulation may in principle be done either on read or write, but for one-to-many (for example, live feed) routing, the address manipulation must be done on output. In the example shown in Figure 3, the mapping is done on output.

A problem arising in such applications is that, for large switches where N may typically equal 1024 and T may equal 32, the required memory access time would be 1/(N*T*8000) seconds, which is 3.8 ns per write or read cycle. This is of the same order as the limit of readily available memory technology. The problem therefore is that switch size is limited by memory speed.

According to the invention there is provided a non-blocking telecommunication circuit switch which produces multiple copies of input data in a reconfigurable memory with memory reconfiguration between write and read cycles providing multiple access to input data, thereby allowing multiple output data streams which can be multiplexed to the required output.

The solution to the above-described problem is provided by embodiments of the invention, by removing the time constraint on the memory.

The invention will now be described by way of example with reference to the accompanying drawings, throughout which like parts are referred to by like references, and in which:

Figure 1 is an illustration of TDM framing;
Figure 2 is a schematic view of a TDM switch;
Figure 3 shows a memory swapping technique for odd and even TDM frames;
Figure 4 shows a memory configuration for read cycles, according to an embodiment of the invention; and
Figure 5 shows a memory configuration for write cycles, according to an embodiment of the invention.

The problem addressed by the present invention can be divided into two parts, namely:

(i) removing the memory read access time constraint; and
(ii) removing the memory write access time constraint.

In the example discussed above with reference to Figure 3, the memory is written in one TDM interval, and read out in the following time interval. This principle is retained in the following solution; however the time available to read and write the memory can be increased at the expense of the amount of memory used. It will be shown that, by using a particular memory architecture, and increasing the total memory size by a multiplier K, the memory read and write bandwidth can be reduced by the same factor K. This principle can then be applied in order to design non-blocking switch matrices of arbitrary size, by trading off memory speed against the amount of memory required.

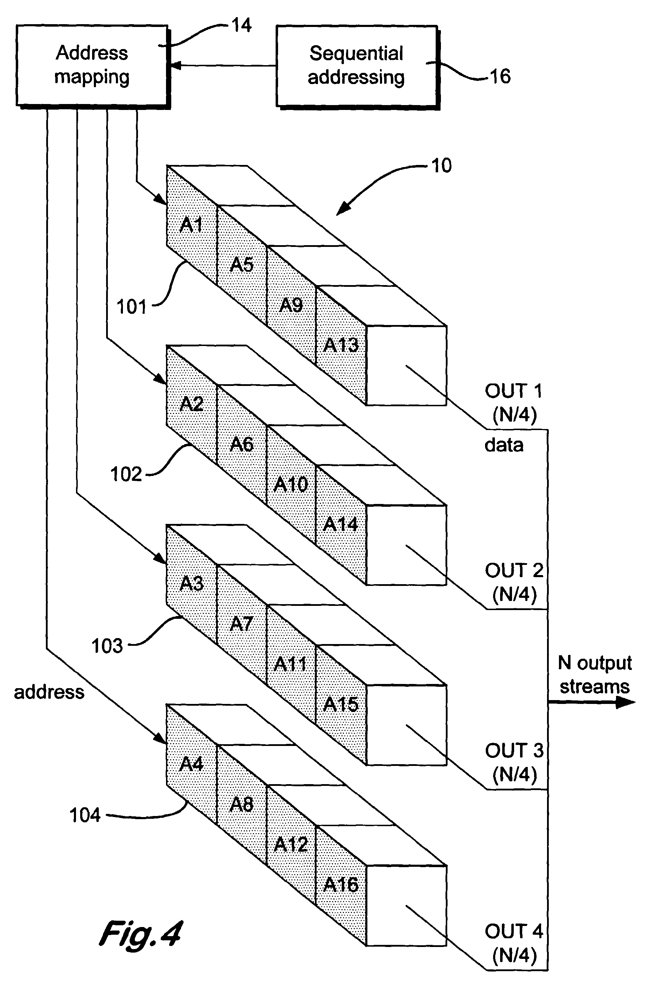

Referring to Figure 4, there is shown a memory configuration for read cycles. This may, for example, be in the context of the memory space 10 (memory A) shown in Figure 3, and so similar reference numerals are used. It is assumed that the memory spaces 10 and 12 (Figure 3) are increased in size by a factor of four. Furthermore, as shown in Figure 4, each memory space is divided into four banks 101 - 104 of four segments each. As shown, the segments for the memory space 10 (memory A) are referenced A1 - A16. Although not shown, the memory space 12 (memory B) has equivalent segments B1 - B16.

Figure 4 shows 16 segments A1 - A16 of memory space 10 (memory A) being read in parallel. The memory is arranged so that each bank of four segments can be read independently from any of the other three banks. The assumption is also made that each of the four banks 101 -104 contains an identical version (or copy) of the data from all N input streams, thereby permitting non-blocking switching. How this is achieved is described later. Also, the N output streams are divided into four equal groups OUT1 - OUT4, with N/4 streams in each group. Each of these groups of streams therefore requires a quarter of the total read bandwidth, and each stream group is filled from one of the four memory banks 101 - 104, as shown in Figure 4.

The output stream group OUT1 can now be filled from the bank comprising the segments A1, A5, A9 and A13. Since this bank contains all the data from all of the N input streams, it therefore permits non-blocking switching. Address manipulation to achieve switch routing is the same as in respect of Figure 3. The amount of data to be read out to each stream group is ((N/4)*T*8000 ) bytes, requiring 15.26 ns cycle time namely four times the cycle time previously described. The output stream groups OUT2 - OUT4 are filled in parallel from the remaining three banks 102 - 104 in the same manner.

It can therefore be seen that in this example an increase in memory size by a factor of four has led to a relaxation in memory read access time by the same factor of four, while still permitting non-blocking switching, provided that it can be arranged for each of the four banks to contain a copy of all of the input data.

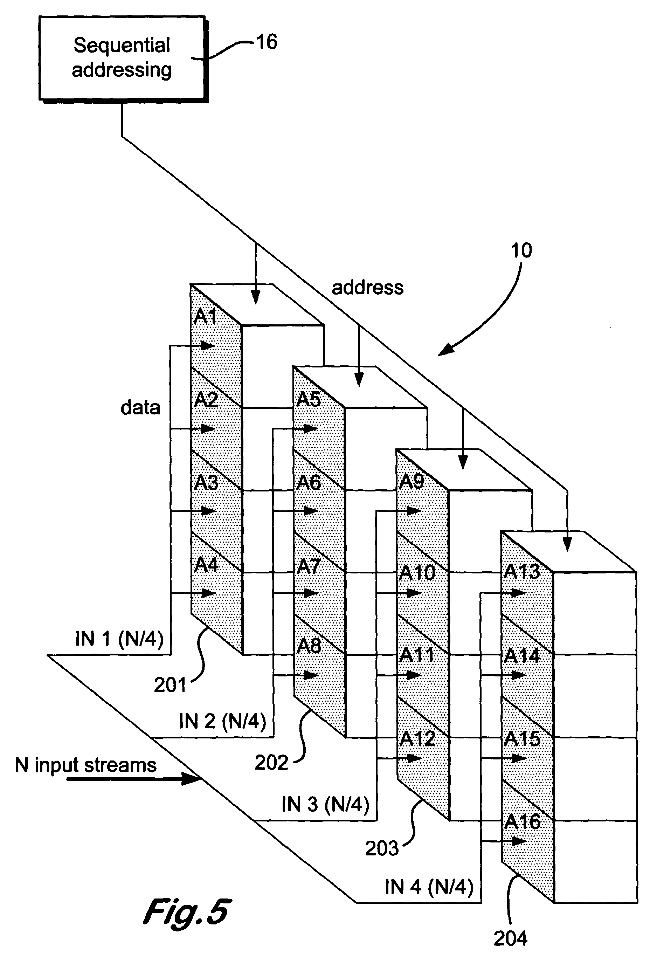

Referring to Figure 5, there is shown a memory configuration for write cycles. Again, this is in the context of the memory space 10 (memory A). Figure 5 shows the segments A1 - A16 being written in parallel. Figure 5 shows how the memory space can be filled from the N input streams to provide the four identical copies as described above in the context of Figure 4, while also reducing the memory write access constraint.

At the end of each TDM frame, the memory spaces are reconfigured, simply by switching of address, data and control lines, or by the use of dual port memory which permits alternative groupings of the memory segments without switching. The four memory banks which are arranged as contiguous rows for reading (Figure 4) are rearranged as four contiguous columns 201 - 204 for writing. Simultaneously, the other memory space makes the opposite transition.

As with the output streams in Figure 4, the N input streams shown in Figure 5 are divided into four equal groups IN1 - IN4, with N/4 streams in each group. During a TDM frame, the stream group IN1 is written to memory segment A1. The amount of data to be written is ((N/4) *T*8000 ) bytes, and therefore the memory access time is 15.26 ns (four times that described above). In parallel, the group IN1 is also written to segments A2, A3 and A4. All these segments are in the same column bank 201 and can be written simultaneously with the same data.

Also in parallel, the group IN2 is similarly written to the column bank 202 including the segments A5 - A8, the group IN3 is written to the column bank 203 including the segments A9 - A12, and the group IN4 is written to the column bank 204 including the segments A13 - A16.

It will be seen that this memory and stream configuration has reduced the memory write speed constraint by a factor of four. This principle overcomes the memory write access problem discussed above. It also satisfies the requirement that each row of memory segments should contain the same data as the other three rows.

The memory reconfiguration between row banks and column banks can be achieved simply by changing the connections of address, data and control lines to the memory. This can be achieved by the use of tri-state logic, for example, or by other techniques such as the use of dual port memory.

It will be apparent that by increasing the memory size of the switch by a factor of four, and utilising parallelism and reconfiguration of the memory between read and write, the required write and read access times of the memory can be increased by the same factor of four. The improvement is not however limited to scaling by a factor of four, and the same technique can be applied, for example, to 16 times or 128 times the amount of memory used in the original example. In principle, any factor could be used, although powers of two tend to make implementation more convenient.

The corollary is that, given an available memory access time, the value of N, being the number of streams that can be switched, is dependent on the quantity of memory that is to be used, and therefore there is in principle no limit on the size of switch that could be contemplated with current technology memory devices. This arises because a relationship has been created in which memory access time is proportional to switch size / memory scaling factor.

Accordingly, using the above-described techniques, it is possible to create a simple scalable switching architecture, allowing switching of a large number of streams, while the constraint of memory size is offset by increased memory utilisation. This allows current limits on switch size to be overcome while using current memory device technology. The technique can be applied to both square and non-square switches.

Practical implementations of the technique described may benefit from the use of ABC memories rather than AB memories as described. This is one way to overcome the one-byte delay which will be experienced when converting from parallel to serial, and from serial to parallel. The additional memory buffer allows this 2-byte delay to be absorbed and allows the input and output serial streams to be kept frame synchronous. There will then be a fixed 2-frame delay through the switching core.

## Claims

1.  A non-blocking telecommunication circuit switch which produces multiple copies of input data in a reconfigurable memory (10) with memory reconfiguration between write and read cycles providing multiple access to input data, thereby allowing multiple output data streams (OUT1-OUT4) which can be multiplexed to the required output.

2.  A switch according to claim 1, wherein the memory (10) comprises memory segments (A1-A16) in matrix form, the memory segments being disposed in columns (201-204) and rows (101-104), memory writing and memory reading being configured to respective different ones of the columns (201-204) and rows (101-104).

3.  A switch according to claim 2, wherein identical data is written to a plurality of columns (201-204) or rows (101-104) of the memory (10), and data is read out from a plurality of rows (101-104) or columns (201-204) of the memory (10).

4.  A switch according to claim 2 or claim 3, wherein the number of memory segments (A1-A16) in a row (101-104) is equal to a number of memory segments (A1-A16) in a column (201-204).

5.  A switch according to claim 4, wherein the number of memory segments (A1-A16) in the rows (101-104) and columns (201-204) is a power of two.

6.  A switch according to claim 5, wherein the number of memory segments (A1-A16) in the rows (101-104) and columns (201-204) is four.

7.  A switch according to any one of the preceding claims, wherein the memory comprises two memory spaces (10,12), each being reconfigurable, reading from one memory space (e.g. 10) occurring during writing to the other memory space (e.g. 12).

EP 1 073 309 A2

1/8000 sec

| TDM frame (n-1) | TDM frame (n) | TDM frame (n+1) |

| 0 | 1 | 2 | 3 | 4 | · · · · · · · · | m |

1 byte of data for
channel 0

*Fig.1*

TDM input streams

TDM output streams

0 ———————————————→

———————————————→ 0

1 ———————————————→

———————————————→ 1

2 ———————————————→

———————————————→ 2

N ———————————————→

———————————————→ M

A non-square switch      N<>M

A square switch      N=M      *Fig.2*

Even TDM frames

Data read

Routing information

Memory A  10

Address mapping  14

Sequential addressing  16

Memory B  12

Data write

Odd TDM frames

Data write

Memory A  10

Sequential addressing  16

Address mapping  14

Routing information

Memory B  12

Data read

Fig.3

*Fig.4*

Sequential addressing — 16

address

10

data

A1
A2
A3
A4

A5
A6
A7
A8

A9
A10
A11
A12

A13
A14
A15
A16

IN 1 (N/4)

201

IN 2 (N/4)

202

N input streams

IN 3 (N/4)

203

IN 4 (N/4)

204

**Fig.5**